(19) Europäisches Patentamt
European Patent Office
Office européen des brevets

(11)     **EP 4 001 841 A1**

(12)                                    **EUROPEAN PATENT APPLICATION**

(43) Date of publication:
**25.05.2022  Bulletin 2022/21**

(21) Application number: **20209260.7**

(22) Date of filing: **23.11.2020**

(51) International Patent Classification (IPC):
**G01C 21/00** *(2006.01)*      **G01S 17/894** *(2020.01)*

(52) Cooperative Patent Classification (CPC):
**G01C 21/3852; G01S 17/894**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **mdGroup Germany GmbH**
**57072 Siegen (DE)**

(72) Inventors:
• **Seube, Nicolas**
**23700 Le Compas (FR)**
• **Mugner, Elliot**
**31100 Toulouse (FR)**

(74) Representative: **Glawe, Delfs, Moll**
**Partnerschaft mbB von**
**Patent- und Rechtsanwälten**
**Postfach 13 03 91**
**20103 Hamburg (DE)**

(54)     **METHOD AND SYSTEM FOR DETERMINING POSITIONS ON THE GROUND FROM AN AERIAL VEHICLE**

(57)     Method and system for determining positions on the ground (15) from an aerial vehicle (17), the method the steps of: scanning the ground (15) with a measuring beam (30) to obtain a point cloud (47), wherein each point (43) of the point cloud (47) represents coordinates of a position on the ground (15) in an aircraft-related coordinate system; segmenting a first subset (44) of points (43) within the point cloud (47), wherein the first subset (44) of points (43) shares a predefined first distortion class (38); segmenting a second subset (45) of points (43) within the point cloud (47), wherein the second subset (45) of points (43) shares a predefined second distortion class (36); geo-referencing the point cloud (47) from the aircraft-related coordinate system to an Earth-related coordinate system; strip adjusting the geo-referenced first subset (44) of points (43) relative to the geo-referenced second subset (45) of points (43) for identifying a set of correction parameters; correcting the geo-referenced first subset (44) of points (43) by the set of correction parameters.

FIG.10

**Description**

The invention relates to a method and a system for determining positions on the ground from an aerial vehicle.

An aerial vehicle being in flight sends a measuring beam to the ground. Reflected portions of the measuring beam can be analyzed for determining the coordinates of the position on the ground from which the measuring beam was reflected. By sending the measuring beam in different directions a point cloud representing coordinates of a plurality of positions on the ground can be obtained.

The measuring device of the aerial vehicle can comprise a light source for emitting the measuring beam and one or more optical elements to deflect the measuring beam in different directions for scanning the ground. The measuring device can have a systematic distortion, for example when the measuring beam is directed in a first direction the distance to the ground is systematically measured too short and when the measuring beam is directed in a second direction the distance to the ground is systematically measured too long.

Such systematic distortion within the measuring device is detrimental to the accuracy of the position data of the point cloud.

The invention is based on the object of presenting a method and a system for determining positions on the ground from an aerial vehicle, wherein the position data has an improved accuracy. Proceeding from the prior art specified, the object is achieved by the features of the independent claims. Advantageous embodiments are specified in the dependent claims.

In the inventive method the ground is scanned with a measuring beam to obtain a point cloud, wherein each point of the point cloud represents coordinates of a position on the ground in an aircraft-related coordinate system. A first subset of points is segmented within the point cloud, wherein the first subset of points shares a predefined first distortion class. A second subset of points is segmented within the point cloud, wherein the second subset of points shares a predefined second distortion class. The point cloud is geo-referenced from the aircraft-related coordinate system to an Earth-related coordinate system. A strip adjustment is performed between the geo-referenced first subset of points and the geo-referenced second subset of points for identifying a first set of correction parameters. The point cloud is geo-referenced from the aircraft-related coordinate system to an Earth-related coordinate system, wherein the geo-referenced first subset of points is corrected by the first set of correction parameters.

The invention is based on the idea of correcting a systematic error of the measuring device with a mathematical operation. In a simple example an aerial vehicle having a measuring device scanning only in a downwardly inclined forward direction and a downwardly inclined backward direction flies along a linear flight path in forward direction. During the measurement each position on the ground covered by the measuring beam will be detected with a forwardly directed measuring beam and at a later point in time with a backwardly directed measuring beam. If the forward directed beam systematically measures the distance too short and the backward directed beam systematically measures the distance too long the coordinates of one and the same position on the ground measured with the forward beam and measured with the backward beam will not coincide. Within the aircraft-related coordinate system the coordinates of points measured with such procedure do not have any obvious spatial relation to each other, which means that there is no easy way of correcting the distortion with a mathematical operation. The invention has realized that after transforming the points to an Earth-related coordinate system the points to be corrected lie in adjacent positions. By strip adjusting the different subsets of points a set of correction parameters can be determined with which the mismatch between the points can be minimized. The point cloud is classified into subsets of points based on predefined distortion classes. The distortion classes provide the information which beam direction of the measuring beam provides which distortion level.

Strip adjustment per se is a known procedure in aerial measuring. If an aerial vehicle flies along a first flight path for scanning a first region on the ground and later flies along a second flight path for scanning a partly overlapping second region on the ground, a strip adjustment can be applied for minimizing the mismatch between the point cloud from the first flight path and the point cloud from the second flight path within the overlapping part of the two point clouds. The mathematical details for conducting a strip adjustment are described for example in P. Glira et al. "Rigorous Strip Adjustment of UAV-Based Laserscanning Data Including Time-Dependent Correction of Trajectory Errors". Photogrammetric Engi-neering and Remote Sensing. 82. 945-954. 10.14358/PERS.82. 12.945, (2016) or P. Glira et al. "RIGOROUS STRIP ADJUSTMENT OF AIRBORNE LASERSCANNING DATA BASED ON THE ICP ALGORITHM". ISPRS Annals of the Photogram-metry, Remote Sensing and Spatial Information Sciences, pp : 73-80, (2015).

The area on the ground that is scanned with the measuring beam may include a plurality of positions, which are covered by points of the first subset and which are covered by points of the second subset. This set of overlapping points between the first subset and the second subset may form the basis for the strip adjustment. Areas on the ground which are covered by only one of the subset are not an appropriate basis for a strip adjusting step.

The strip adjustment step can include an optimization procedure, for example in form of an Iterative Closest Point algorithm or any adaptation of this algorithm. The optimization can be done based on a set of tie points selected from the participating subsets of points. The selection step can be done randomly or using a geometrical criterion (orientation of the normal for instance). All the steps after the point cloud is obtained with the UAV can be done as post-processing steps after the UAV has landed.

The measurement device of the aircraft measures the position on the ground within a coordinate system that is attached to the aircraft (aircraft-related coordinate system). If position and orientation of the aircraft relative to the Earth is known, the position data from the aircraft-related coordinate system can be georeferenced so that the position data from the aircraft-related coordinate system is transferred to position data relative to the Earth.

The coordinate system of the aircraft can be referenced to the Earth by known navigation systems and sensors. For example, the position of the aircraft relative to the Earth can be determined with a Global Navigation Satellite System (GNSS) like GPS (Global Positioning System). The aircraft can further include an Inertial Measurement Unit (IMU) for measuring the orientation of the aircraft relative to the Earth or a linear acceleration and angular velocity of the aircraft. If the position and orientation of the aircraft are known the coordinates from the aircraft-related coordinate system can be transferred to coordinates in the Earth-related coordinate system.

More specifically, the geo-referencing step uses raw data from GNSS, IMU and LiDAR to provide points in an Earth-related frame ($n$). Geo-referencing of a given point measured with the measuring device can be done as follows.

From the beam angles, a launch vector is computed, which is expressed in the aircraft-related ($bS$) frame. From IMU attitude data the launch vector is transformed to the ($n$) frame. The beam travel time is used to construct the path from the optical center of the measuring device to the ground. Finally, the measuring system Positioning Reference Point position, is coordinated to the point in the ($n$) frame.

Denoting a geo-referenced point in the ($n$) frame acquired at time ($t$) by $X_n = (x(t),y(t),z(t))^T_n$ frame, we have:

$$X_n(t) = P_n(t) + C^n_{bI}(\varphi(t),\theta(t),\Psi(t)) \left( C^{bI}_{bS} r_{bS}(\rho(t),\alpha(t),\beta(t)) + a_{bI} \right)$$

$$(1)$$

wherein:

- $P_n(t)$ is the position delivered by the GNSS receiver in frame ($n$),

- $C^n_{bI}(\varphi(t),\theta(t),\Psi(t))$ is the coordinate transformation from the IMU body frame to the navigation frame (which can be parametrized using Euler angles ($\varphi(t),\theta(t),\psi(t)$), denoting pitch, roll and yaw, respectively),

- $r_{bS}(\rho(t),\alpha(t),\beta(t))$, is the coordinate point in the aircraft-related frame ($bS$) as provided by the measuring device. ($\rho$, $\alpha,\beta$) denote the distance of the detected point from the optical center of the measuring device, $\alpha,\beta$ denote the angles defining the pointing direction in polar coordinates.

- $a_{bI}$ is the lever-arm vector coordinated in the IMU frame and $C^{bI}_{bS}$ is the boresight coordinate transformation.

The lever-arm between the phase center of the GNSS antenna and the optical center of the LiDAR is supposed to be known. Boresight angles between the IMU frame and the LiDAR body frame are supposed to be known.

The correction parameters that can be used to adjust the subsets of points are:

- $\delta P_n(t)$: position shifts

- ($\delta\varphi(t),\delta\theta(t),\delta\psi(t)$): attitude angle shifts

The correction parameters can be time dependent and represented by a parametric function (for example a spline) on a given time interval from a time subdivision.

Correction parameters are the set of parameters that defines the time dependent position and attitude shifts as described by the following equation (equation 2):

$$X_n(t) = P_n(t) + \delta P_n(t) + C^n_{bI}(\varphi(t) + ä\varphi(t),\theta(t) + ä\theta(t),\psi(t) + ä\psi(t)) \left( C^{bI}_{bS} r_{bS}(\rho(t),\alpha(t),\beta(t)) + a_{bI} \right)$$

The correction parameters determined by the strip adjustment step can be used according to equation (2) for correcting the first subset of points relative to the second subset of points within the Earth-related coordinate system. This means the geo-referenced position data of the first subset of points are recomputed within the Earth-related coordinate system by using the first correction parameters. This provides a point cloud in the Earth-related coordinate system, in which the systematic mismatch between the first subset of points and the second subset of points is corrected.

In one embodiment of the invention a first set of correction parameters is determined, which covers the complete mismatch between the first subset of points and the second subset of points. This is reasonable if on of the subsets of points is considered to be free from a systematic distortion. Such correction parameters have the effect of bringing the first subset of points as close as possible to the second subset of points.

If one of the subset of points is known to provide correct position data, because it corresponds to a minimum level of distortion, this subset of points can be used as a reference and the correction parameters can be determined so that other subsets of points are corrected by equation (2) to be as close as possible to the reference subset of points.

More generally speaking, if the level of distortion associated to each subset of points is not known, a arbitrary subset of points can be selected as the reference subset of points within the strip adjustment process. In this case, only the relative mismatch between the subset of points is minimized. The inventive method can be carried out by segmenting more than two subsets of points from the point cloud. For example, more than three subsets of points, preferably more than five subsets of points, more preferably more than eight subsets of points are segmented from the point cloud. Each of the subsets of points can be correlated with a different distortion class. Preferably, each subset of points has a partial overlap in positions covered on the ground with at least one other subset of points. The strip adjustment step can include each of the subsets of points. Correction parameters can be determined for each of the subsets of points. Each subset of points can be corrected with the corresponding correction parameters according to equation (2).

If there are more than two subsets of points each subset may have a set of overlapping points with at least one of the other subsets of points. It is preferable that each subset of points has a set of overlapping points with at least two other subsets of points, more preferably with at least three other subsets of points.

The measuring device, which particularly is a LiDAR system, can comprise a LASER scanning system for deflecting the measuring beam according to a scanning pattern. The scanning pattern can be enclosed by an outer cone shape. The cone shape can enclose an angle of for example 28° or 70° with a central axis of the measuring device. The scanning pattern as seen on the ground can have a simple shape like a circle or an oval within the measuring cone or like a linear pattern.

The scanning pattern can also have a more complex shape. In one embodiment the scanning pattern covers a ring-shaped region that is enclosed between an outer envelope and an inner blind area. The scanning pattern can be configured so that the points obtained with the scanning pattern densely cover the scanning region. This means that any circle that is arranged within the scanning region and that covers at least 10%, preferably at least 5%, preferably at least 2% of the scanning region includes at least one point of the scanning pattern. The scanning pattern can have a plurality of crossing points, for example more than 50 crossing points, preferably more than 100 crossing points, more preferably more than 400 crossing points.

Obtaining a set of overlapping points between two subsets of points can be done by altering the position of the aerial vehicle during the measurement. In the alternative or in addition to altering the position of the aerial vehicle during the measurement a scanning pattern can be applied which covers identical positions on the ground two or more times, wherein from the same position on the ground one measuring point is obtained belonging to the first subset of points and another measuring point is obtained belonging to the second subset of points.

The distortion classes can define a correlation between a direction of the measuring beam relative to a central axis of the measuring device, the time stamp of the measuring beam, the distance of the measured point from the center point of the scanning pattern within the plane perpendicular to the central axis of the measuring device and a level of distortion. Once the direction and/or the distance and/or the time stamp of the measuring beam relative to the central axis are known a point measured with a measuring beam can be tagged with the corresponding distortion class. The tags of the points can be used for segmenting the points of the measured point cloud into different subsets of points.

The correlation between the distortion classes and the directions, the timestamp or the distance of the measuring beam is assumed to be known. For example, the correlation can be determined by scanning with the measuring beam a surface having a known shape, e.g a plane surface. From the mismatch between the position provided by the measuring beam and the true position for each direction of the measuring beam a distortion map can be obtained. Based on the distortion map groups of beam directions having a similar level of distortion can be classified to one distortion class.

In one embodiment the inventive method includes a step of determining a correlation between a direction and/or a distance and/or time of the measuring beam and a distortion class. Preferably, such correlation is determined for each of the directions of the measuring beam.

The measuring device of the aerial vehicle can comprise a light source for emitting a measuring beam. The direction of the emitted light beam can correspond to a central axis of the measuring device. When being in use the central axis of the measuring device can be a substantially vertical axis.

The measuring device can have an optical element adapted for deflecting the measuring beam in different directions. The optical element can be movable relative to a frame of the measuring device for scanning the measuring beam along a scanning pattern. The optical element can be a wedge-shaped prism that is rotatable relative to the frame of the measuring device. The axis of rotation of the optical element can be parallel to or correspond to the central axis of the measuring device. By rotating the wedge-shaped prism the measuring beam is scanned along a circular path on the ground, if the aerial vehicle is in a fixed position. The circular path of the optical element can be divided in a plurality of direction ranges and/or distance ranges and/or time ranges. Each of the direction, distance and time ranges can be assigned to one of the distortion classes. Any qualitative indicator determined from the knowledge of the direction and/or time and/or distance, for example the variation through time of the direction can be used to define a distortion class.

The measuring device can have a second optical element, wherein the measuring beam on its path from the light source to the ground first is deflected by the first optical element and then it is deflected by the second optical element. The second optical element can be a wedge-shaped prism. The second optical element can be rotatable relative to the frame of the measuring device. The axis of rotation can be identical to the axis of rotation of the first optical element. The angular velocity of the first optical element can be different form the angular velocity of the second optical element. If the ratio between the angular velocity of the first optical element and the angular velocity of the second optical element is irrational ratio a non-periodic scanning patterns will be created, while a rational ratio will create a periodic scanning pattern. The first and second optical elements can be arranged as a Risley prism. The measuring system can be a LiDAR system.

If a Risley prism is used for deflecting the measuring beam the direction of the measuring beam can be determined, based on data like angular position of the Risley prism, angular velocity of the Risley prism and/or timestamps. Any of these data can be used for defining the correlation between beam directions and distortion classes. In particular, measuring beams can share the same level of distortion if for instance
they are generated in a smalltime interval and/or their elevation and azimuth angles with respect to the frame of the measuring device are close enough. The time intervals on which beams are regrouped into classes may be delimited by time instants at which the variation of the beam angle reaches a local maximum (except for line or circle patterns), or by any regular time subdivision.

The aerial vehicle can be an unmanned aerial vehicle (UAV). The aircraft can be a vertical takeoff and landing (VTOL) aircraft.

The invention further relates to a System for determining positions on the ground from an aerial vehicle. The system comprises a UAV having a measuring device for scanning the ground with a measuring beam to obtain a point cloud so that each point of the point cloud represents coordinates of a position on the ground in an aircraft-related coordinate system. The system further comprises a calculation module adapted for performing the steps of segmenting a first subset of points within the point cloud, wherein the first subset of points shares a predefined first distortion class; segmenting a second subset of points within the point cloud, wherein the second subset of points shares a predefined second distortion class; Geo-referencing the point cloud from the aircraft-related coordinate system to an Earth-related coordinate system; strip adjusting the geo-referenced first subset of points relative to the geo-referenced second subset of points for identifying a first set of correction parameters; and correcting the geo-referenced first subset of points by the first set of correction parameters. The calculation module can be a single component or a combination of devices. The devices can be arranged in different locations.

The system can be developed with further features which are described in the context of the inventive method. The method can be developed with further features which are described in the context of the inventive system.

In the following, the invention is described in exemplary fashion on the basis of advantageous embodiments, with reference being made to the attached drawings. In detail:

Fig. 1:     shows an embodiment of the inventive system;

Fig. 2:     shows a schematic illustration of an inventive measuring system;

Fig. 3:     shows a schematic illustration of distortion classes of the measuring system of Fig. 2;

Fig. 4:     shows a point cloud obtained with the measuring system of Fig. 2;

Fig. 5:     shows another embodiment of an inventive measuring system;

Fig. 6:     shows the measuring system of Fig. 5 in a different state;

Fig. 7:     a perspective view of the measuring system of Fig. 5;

Fig. 8:     a scanning pattern of the measuring system of Fig. 7;

Fig. 9:     another scanning pattern of the measuring system of Fig. 7;

Fig. 10:     a point cloud obtained with the measuring system of figure 8.

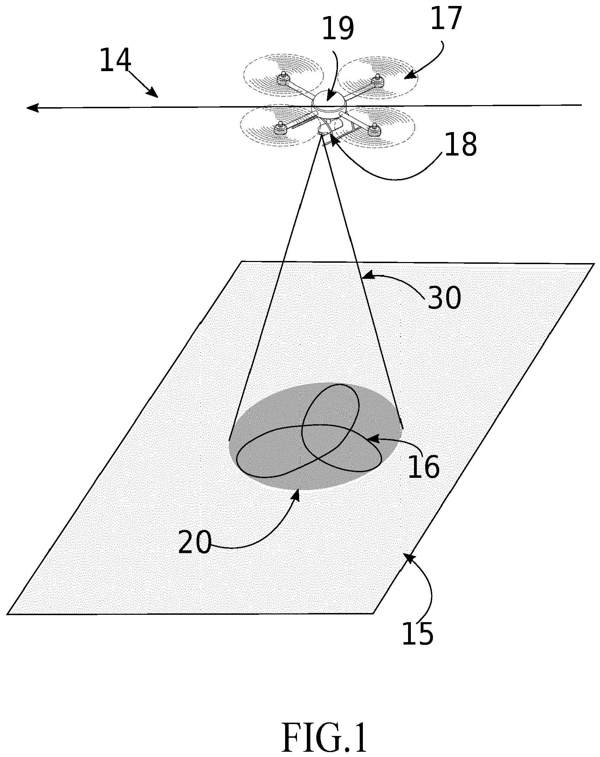

In Fig. 1, a UAV 17 is operated remotely by a ground-based operator (not shown). The operator uses a remote control for controlling the UAV 17 via a radio frequency (RF) link. Mission planning information including flight control and operating instructions for the UAV 17 are either stored in a controller memory of the remote control 10 or a in controller within a body 19 of the UAV 17. The UAV 17 carries a measuring device in form of a LiDAR system 18. The LiDAR system 18 comprises a LASER scanner, an Inertial Measurement Unit (IMU), and a GNSS receiver. The LiDAR system 18 is powered by the UAV 17.

The UAV 17 is shown in flight above an area on the ground 15, wherein the UAV 17 follows a survey line 14. The LiDAR scanner 18 mounted on the UAV emits LASER beams 30 with varying directions so that the ground is scanned with a scanning pattern 16 that is enclosed with a circular envelope 20. The light of the LASER beams 30 is reflected back to the LiDAR system 18 by objects on the ground. From the direction of the LASER beams 30 and the time of flight of the LASER light the position of the object relative to the UAV 17 can be determined. The scanning of the ground with the LASER beams 30 results in a point cloud 47, wherein each point 43 of the point cloud 47 represents a position on the ground respectively the position of an object on the ground.

The data obtained with the LiDAR system 18 provides position data relative to an aircraft-related coordinate system. By using additional information from the navigation system of the UAV 17, namely from the IMU and the GNSS receiver of the UAV 17, the position data of the point cloud 47 is georeferenced as 3D points in an Earth-related coordinate system.

The LiDAR system 18 comprises a wedge-shaped prism 21 being rotatable about a central axis 22 of the LiDAR system 18. The light beam 30 being emitted along the central axis 22 is deflected by the wedge-shaped prism 21 so that the light beam 30 after the prism 21 encloses an angle 23 with the central axis 22. When the prism 21 is rotated the light beam 30 scans a circular scanning pattern 16 on the ground 15.

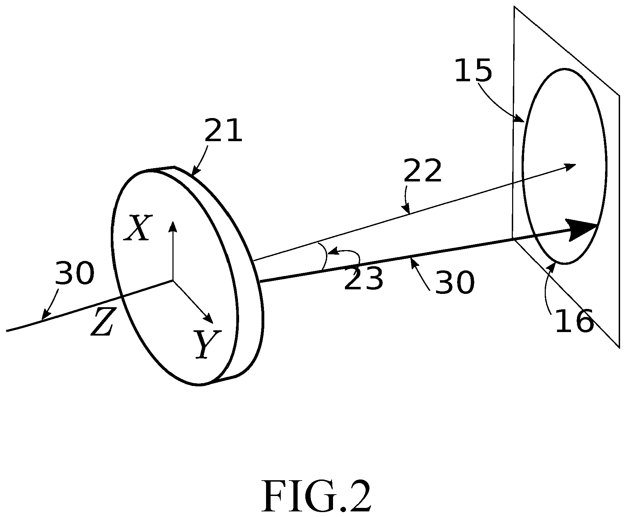

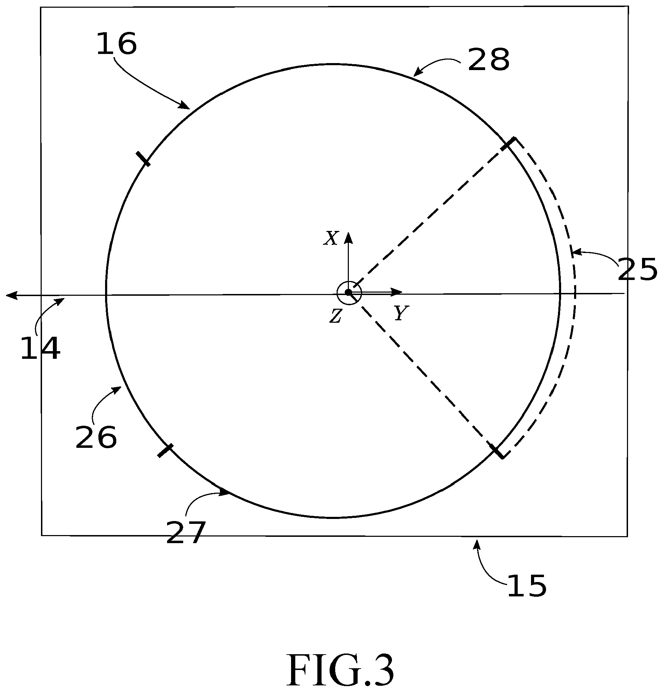

In Fig. 2 the LiDAR LASER scanner 18 is formed by single rotating prism. The LASER beam 30 is deviated from the central axis 22 with an angle 23. When the prim 21 is rotating at a given angular velocity, the beam intersects the plane 15 and forms the circle 16. In the top view of the scanning pattern 16 shown in Fig. 3 the circular scanning path is divided in four sectors 25, 26, 27, 28. The error in the orientation or in the angle measurement of the prism 21 has the effect that the LiDAR system 18 provides roughly correct position data in two of the sectors, namely sectors 27, 28. In sector 25 the distance to the ground 15 is measured too short, in sector 26 the distance to the ground 15 is measured too long.

When the UAV 17 follows survey line 14 position data is provided from an area on the ground 15, wherein the same positions on the ground 15 are first scanned with the measuring beam 30 being in sector 26 and later are scanned with the measuring beam 30 being in sector 25 of the scanning pattern 16. When being geo-referenced the coordinates of one and the same position on the ground 15 that are measured with in sector 25 will not match with the coordinates that are measured in sector 26, but the coordinates for one and the same position on the ground lie in two different parallel planes. With the inventive method the mismatch between different sets of coordinates belonging to the same position on the ground is minimized.

In the example of figure 3 different distortion classes are correlated with each of the sectors 25, 26, 27, 28. The points within the point cloud having the same distortion class share the same level of systematic distortion, namely "too short" for sector 25, "too long" for sector 26 and "roughly correct" for sectors 27, 28. When following the scanning pattern 16 the measuring beam 30 has a plurality of different directions relative to the central axis 22 of the LiDAR system 18. Each of these directions is correlated with a distortion class. Each single point that is taken within the scanning pattern is tagged with a distortion class. The points of the point cloud sharing a first distortion class form a first subset of the point cloud, the points of the point cloud sharing a second distortion class form a second subset of the point cloud and so on.

The point cloud as measured provides coordinates in the aircraft-related coordinate system. By using additional information from the navigation system of the UAV 17 the point cloud can be geo-referenced which means that each set of coordinates for a position on the ground is transformed from the aircraft-related coordinate system to the Earth-related coordinate system.

Within the aircraft-related coordinate system the different subsets of points do not stand in an obvious relation relative to each other. After geo-referencing the deviation between two points from different subsets being related to the same position on the ground can be determined and a strip adjustment algorithm can be applied for minimizing the mismatch. The strip adjustment will result in a set of correction parameters that can be applied to equation (2) to compute each of the points of one subset of points for reducing the mismatch between this subset of points and another subset of points. According to the invention position data in a coordinate system (Earth-related coordinate system) that is different from the coordinate system of the LiDAR device 18 is thus used for correcting a systematic error within the LiDAR device 18.

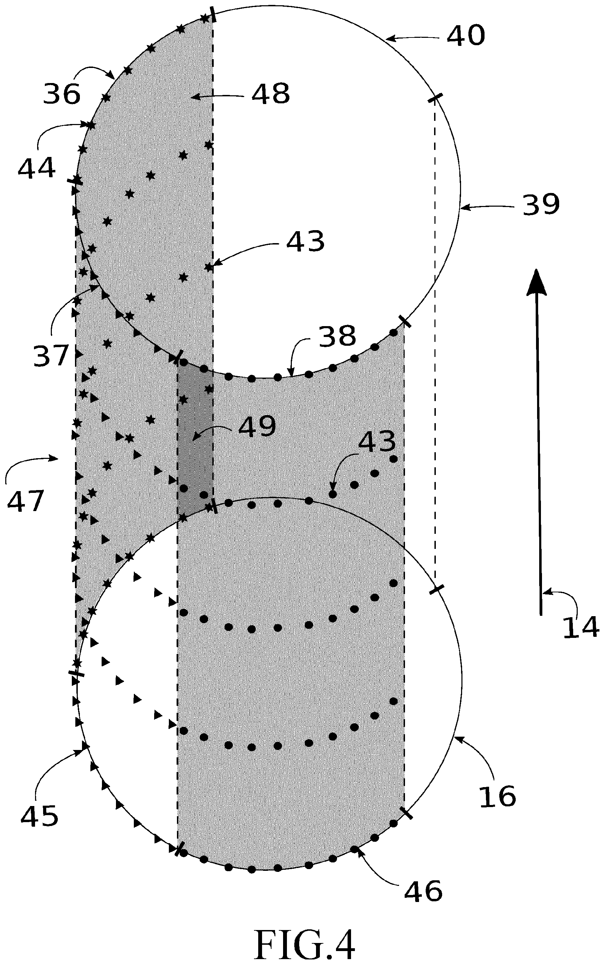

In Fig. 4 a point cloud 47 obtained with the LiDAR system 18 of Fig. 2 is shown. The scanning pattern 16 is divided in five distortion classes 36-40. Based on the distortion classes 36-40 the points 43 of the point cloud 47 separated in five subsets of points 43. The points 43 in the first distortion class 36 form a first subset 44 of points 43 (marked with a star in Fig. 4). The points in the second distortion class 37 form a second subset 45 of points 43 (marked with a triangle). The points in the third distortion class 38 form a third subset 46 of points (marked with a dot). As the UAV 17 moves along survey line 14 each of the subsets 44, 45, 46 of points covers a virtual strip 48 on the ground 15. Based on the overlapping regions 49 between the different virtual strips the strip adjustment step can be performed.

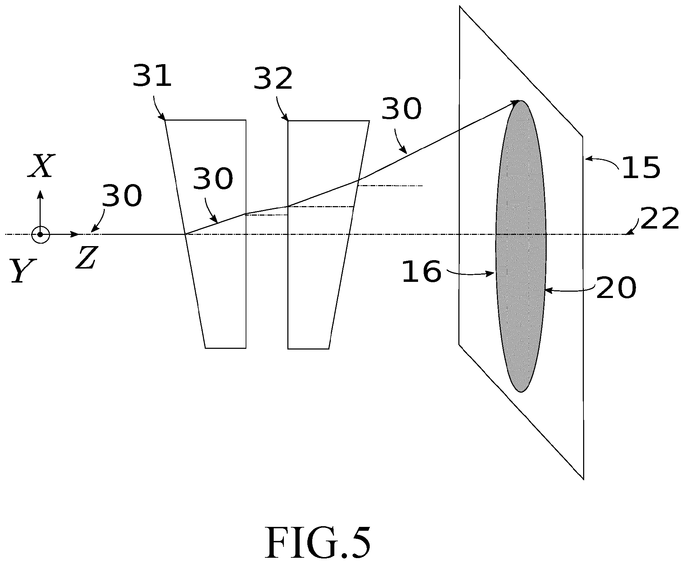

In the embodiment of Fig. 5 the LiDAR system 18 has an optical system comprising a first optical element 31 in the form of a wedge-shaped prism and a second optical element 32 in the form of a wedge-shaped prism. The two optical elements 31, 32 are coaxially aligned and rotatable about the central axis 22 of the LiDAR system 18. Such arrangement of optical elements 31, 32 is called a Risley prim. In Fig. 5 both prisms have the same angular position so that the thick portions of both prisms 31, 32 as well as the thin portions of both prisms 31, 32 are aligned. In this state of the Risley prism 31, 32 the LASER beam 30 has a maximum deflection. If both prisms 31, 32 are rotated synchronously the light beam 30 describes a circular scanning pattern 16 on the ground 15. The circular scanning pattern 16 in the aligned state of the prisms 31, 32 corresponds to the envelope 20 of the LiDAR system 18.

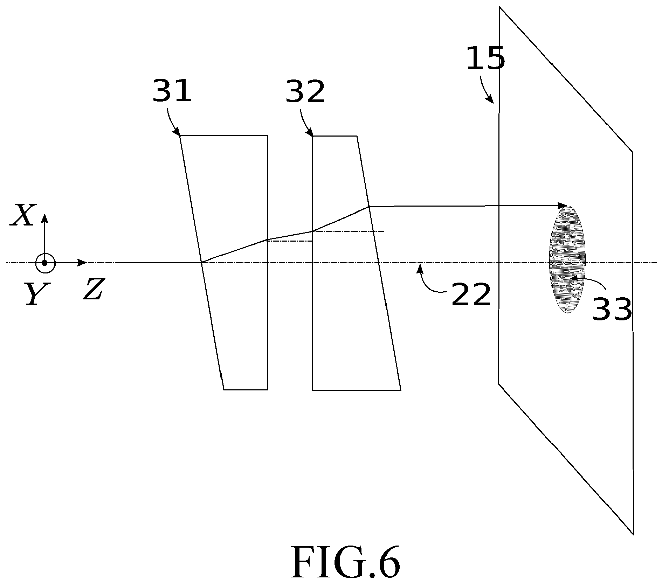

In Fig. 6 the angular positions of the two prisms 31, 32 are separated by 180° so that the thin portion of the first prism 31 is aligned with the thick portion of the second prism 32 and vice versa. In this counter-aligned state of the prisms 31, 32 the light beam 30 undergoes a lateral shift and propagates in a direction parallel to the central axis 22 towards the ground 15. When the two prisms 31, 32 are rotated synchronously the light beam 30 describes a circular scanning pattern 16 on the ground 15. The circular scanning pattern 16 encloses a blind area 33 around the central axis 22, which is not accessible with the LiDAR system 18. The region between the envelope 20 and the blind area 33 corresponds to the scanning region 34 of the LiDAR system 18.

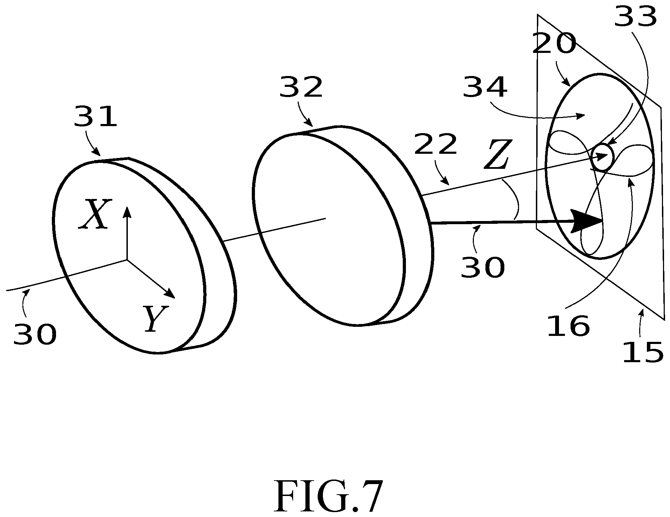

If the Risley prisms 31, 32 are rotated at different angular velocities a more complex scanning pattern 16 is generated between the envelope 20 and the blind area 33. One example of such scanning pattern 16 is shown in Fig. 7. The exact form of the scanning pattern 16 depends on the ratio between the angular velocity of the first Risley prism 31 and the second Risley prism 32. The scanning pattern will be periodical if the ratio is rational, the scanning pattern will be non-periodical if the ratio is irrational.

The ratio of the angular velocities can be adjusted so that the scanning region 34 of the LiDAR system 18 is densely covered with the scanning pattern 16. This enables the LiDAR system 18 to provide a substantially complete picture of the scanned region 34 without altering the position of the UAV 17 having the LiDAR system 18 on board.

For obtaining position data from regions on the ground outside the scanning region 34 the position of the UAV 17 is changed. The two prisms 31, 32 can be rotated continuously during the measurement. The angular velocity of both prisms 31, 32 can be constant.

For any Risley prism 31, 32 a distortion map can be obtained, wherein the distortion map provides a level of distortion for each direction of the measuring beam 30 within the scanning region 34. If the level of distortion is defined on a relative scale the distortion can for example range from -1% to +1%. This means each direction of the measuring beam 30 within the scanning region 34 is correlated to a distortion level having a value between -1% and +1%. Based on the distortion level the beam directions can be classified in distortion classes. For example, four distortion classes can be defined, wherein the first distortion class includes beam directions having a level of distortion between -1% and -0.5%, wherein the second distortion class includes levels of distortion between -0.5% and 0%, wherein the third distortion class includes levels of distortion between 0% and 0.5% and wherein the fourth distortion class includes levels of distortion between 0.5% and 1%. Based on the distortion map each direction of the measuring beam 30 is correlated with a distortion class.

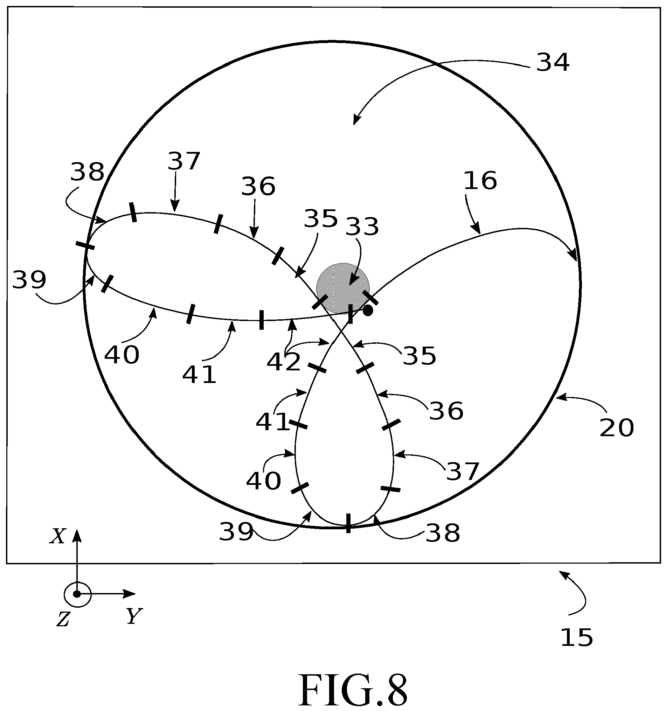

In Fig. 8 a part of a scanning pattern 16 is shown, wherein different sections of the scanning pattern 16 are correlated with different distortion classes 35-42. Each set of coordinates from the ground 15 that is obtained with a measuring beam 30 being within one of the sections of the scanning pattern 16 is tagged with a distortion tag identifying the level of distortion according to distortion classes 35-42.

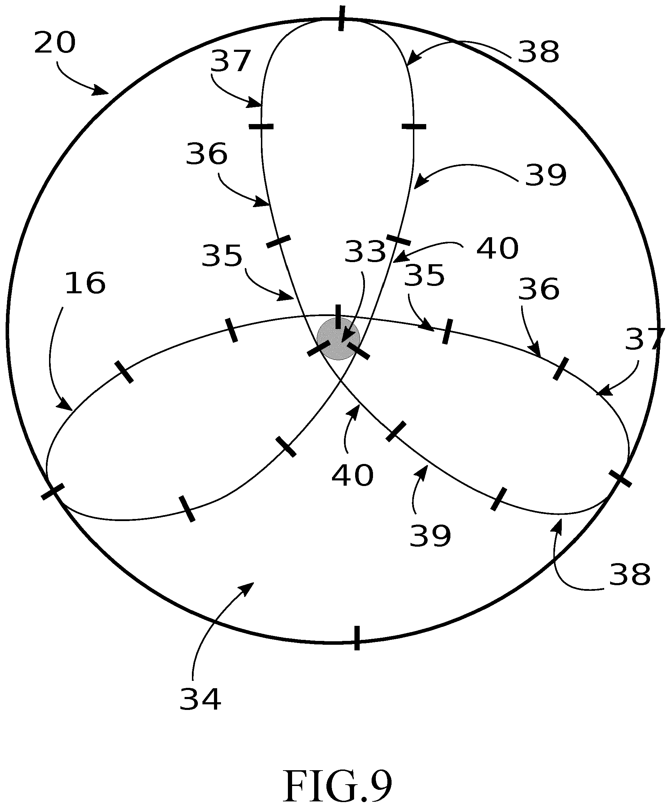

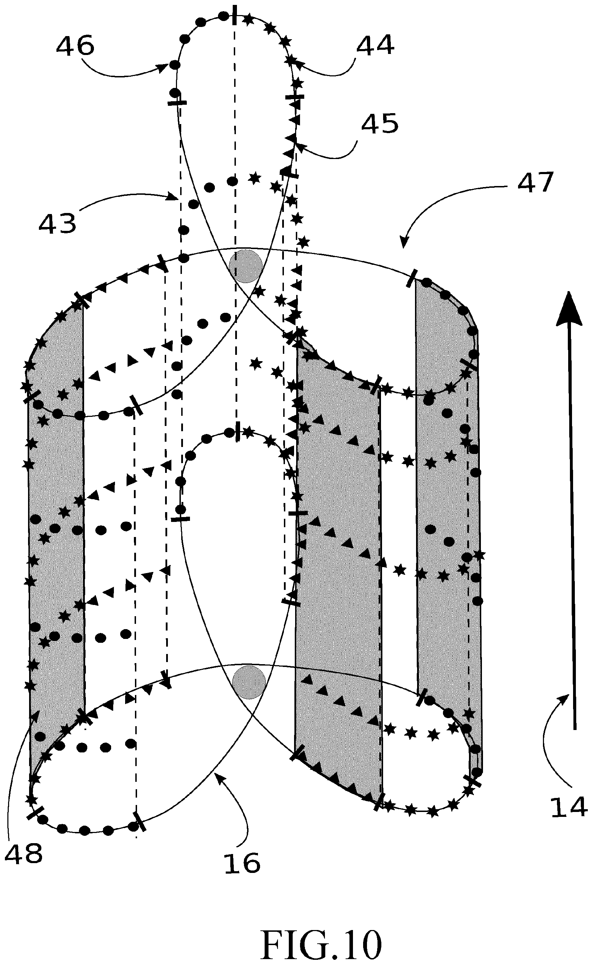

Another scanning pattern 16 having a simple periodic form is shown in Fig. 9. The scanning pattern 16 is classified in six distortion classes 35-40. When the UAV 17 follows survey line 14 the scanning pattern 16 follows a path as indicated in Fig. 10. The points 43 sharing a common distortion class are marked with a common symbol (e.g., star, triangle). All the points having a common symbol form a subset of points of the point cloud obtained with the UAV 17 on survey line 14. In Fig. 10 three different subsets 44, 45, 46 are marked with reference numerals. The sum of all the subsets corresponds to the point cloud 47 obtained during the measurement along survey line 14.

Along survey line 14 each subset 44, 45, 46 of points forms a virtual strip over the scanned region of the ground 15. The virtual strip of subset 46 of points is marked with reference 48 in Fig. 10. By performing a strip adjustment in the Earth-related coordinate system based on the overlapping regions between the subsets of points a set of correction parameters is identified for each of the subsets of points. The correction parameters are applied to adjust the subsets relatively to each other within the Earth-related coordinate system using equation (2) so that the systematic distortion of the LiDAR system 18 is corrected.

**Claims**

1.  Method for determining positions on the ground (15) from an aerial vehicle (17), the method comprising

    a. Scanning the ground (15) with a measuring beam (30) to obtain a point cloud (47), wherein each point (43) of the point cloud (47) represents coordinates of a position on the ground (15) in an aircraft-related coordinate system;
    b. Segmenting a first subset (44) of points (43) within the point cloud (47), wherein the first subset (44) of points (43) shares a predefined first distortion class (38);
    c. Segmenting a second subset (45) of points (43) within the point cloud (47), wherein the second subset (45) of points (43) shares a predefined second distortion class (36);
    d. Geo-referencing the point cloud (47) from the aircraft-related coordinate system to an Earth-related coordinate system;
    e. Strip adjusting the geo-referenced first subset (44) of points (43) relative to the geo-referenced second subset (45) of points (43) for identifying a set of correction parameters;
    f. Correcting the geo-referenced first subset (44) of points (43) by the set of correction parameters.

2.  Method of claim 1, wherein there is a partial overlap between the positions on the ground (15) covered by the first subset (44) of points (43) and the positions on the ground (15) covered by the second subset (45) of points.

3.  Method of one or more of claims 1 or 2, wherein the position of the UAV (17) is changed along a survey line (14) during the measurement.

4.  Method of one or more claims 1 to 3, wherein one or more of steps b. to f. are performed as post-processing steps after the UAV (17) has landed.

5.  Method of one or more of claims 1 to 4, wherein more than two subsets (44, 45, 46) of points (43) are segmented from the point cloud (47).

6.  Method of one or more of claims 1 to 5, wherein two or more subsets (44, 45, 46) of points (43) are corrected with sets of correction parameters.

7.  Method of one or more of claims 1 to 6, wherein each point (43) of the point cloud (47) is tagged with a distortion class (35-42).

8.  Method of one or more of claims 1 to 7, comprising the step of determining a correlation between a direction, a distance and/or a time stamp of the measuring beam (30) and a distortion class (35-42).

9.  Method of one or more of claims 1 to 8, wherein the measuring beam (30) is deflected by a Risley prism (31, 32).

10. Method of one or more of claims 1 to 9, wherein the UAV (17) carries a measuring device (17) in form of a LiDAR device.

11. System for determining positions on the ground (15) from an aerial vehicle (17), the system comprising a UAV (17) with a measuring device (18) for scanning the ground (15) with a measuring beam (30) to obtain a point cloud (47), so that each point (43) of the point cloud (47) represents coordinates of a position on the ground (15) in an aircraft-related coordinate system; the system further comprising a calculation module adapted for performing the following steps:

    a. Segmenting a first subset (44) of points (43) within the point cloud (47), wherein the first subset (44) of points (43) shares a predefined first distortion class (38);
    b. Segmenting a second subset (45) of points (43) within the point cloud (47), wherein the second subset (45) of points (43) shares a predefined second distortion class (36);
    c. Geo-referencing the point cloud (47) from the aircraft-related coordinate system to an Earth-related coordinate system;
    d. Strip adjusting the geo-referenced first subset (44) of points (43) relative to the geo-referenced second subset (45) of points (43) for identifying a set of correction parameters;
    e. Correcting the geo-referenced first subset (44) of points (43) by the set of correction parameters.

FIG.1

FIG.2

FIG.3

FIG.4

FIG.5

FIG.6

## FIG.7

EP 4 001 841 A1

FIG.8

16

FIG.9

FIG.10

Europäisches
Patentamt

European
Patent Office

Office européen
des brevets

**EUROPEAN SEARCH REPORT**

Application Number

EP 20 20 9260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 739 359 A (MITSUBISHI HEAVY INDUSTRIES, LTD.) 18 November 2020 (2020-11-18) * paragraphs [0001], [0005] - [0010], [0026] - [0031], [0035], [0039], [0049] - [0054], [0056] * * figures 1-5 * | 1-11 | INV. G01C21/00 G01S17/894 |
| A | Crombaghs M.J.E. ET AL: "On the adjustment of overlapping strips of laser altimeter height data", International Archives of Photogrammetry and Remote Sensing, Vol. XXXIII, Part B3, 1 January 2000 (2000-01-01), XP055802161, Amsterdam Retrieved from the Internet: URL:https://www.isprs.org/PROCEEDINGS/XXXIII/congress/part3/230_XXXIII-part3.pdf [retrieved on 2021-05-06] * the whole document * | 1-11 | |
| A | WILLERS J ET AL: "A post-processing step error correction algorithm for overlapping LiDAR strips from agricultural landscapes", COMPUTERS AND ELECTRONICS IN AGRICULTURE, ELSEVIER, AMSTERDAM, NL, vol. 64, no. 2, 1 December 2008 (2008-12-01), pages 183-193, XP025532892, ISSN: 0168-1699, DOI: 10.1016/J.COMPAG.2008.04.013 [retrieved on 2008-06-24] * the whole document * | 1-11 | TECHNICAL FIELDS SEARCHED (IPC) G01C G01S |

-/--

The present search report has been drawn up for all claims

| Place of search | Date of completion of the search | Examiner |
|---|---|---|
| The Hague | 6 May 2021 | Eitner, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 20 20 9260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG YONGJUN ET AL: "LiDAR Strip Adjustment Using Multifeatures Matched With Aerial Images", IEEE TRANSACTIONS ON GEOSCIENCE AND REMOTE SENSING, IEEE SERVICE CENTER, PISCATAWAY, NJ, US, vol. 53, no. 2, 1 February 2015 (2015-02-01), pages 976-987, XP011556025, ISSN: 0196-2892, DOI: 10.1109/TGRS.2014.2331234 [retrieved on 2014-08-12] * the whole document * | 1-11 | |
| A | GLIRA PHILIPP ET AL: "A Correspondence Framework for ALS Strip Adjustments based on Variants of the ICP Algorithm", PHOTOGRAMMETRIE, FERNERKUNDUNG, GEOINFORMATION, [Online] vol. 2015, no. 4, 1 August 2015 (2015-08-01), pages 275-289, XP055800377, ISSN: 1432-8364, DOI: 10.1127/pfg/2015/0270 Retrieved from the Internet: URL:https://www.dgpf.de/pfg/2015/pfg2015_4_glira.pdf> * the whole document * | 1-11 | TECHNICAL FIELDS SEARCHED (IPC) |

The present search report has been drawn up for all claims

| Place of search | Date of completion of the search | Examiner |
|---|---|---|
| The Hague | 6 May 2021 | Eitner, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 20 9260

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2021

| Patent document cited in search report | | Publication date | Patent family member(s) | | Publication date |
|---|---|---|---|---|---|
| EP 3739359 | A | 18-11-2020 | CN | 111948659 A | 17-11-2020 |
| | | | EP | 3739359 A1 | 18-11-2020 |
| | | | JP | 2020187079 A | 19-11-2020 |
| | | | US | 2020363514 A1 | 19-11-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. GLIRA et al.** Rigorous Strip Adjustment of UAV-Based Laserscanning Data Including Time-Dependent Correction of Trajectory Errors. *Photogrammetric Engi-neering and Remote Sensing,* 2016, vol. 82, 945-954

- **P. GLIRA et al.** RIGOROUS STRIP ADJUSTMENT OF AIRBORNE LASERSCANNING DATA BASED ON THE ICP ALGORITHM. *ISPRS Annals of the Photogram-metry, Remote Sensing and Spatial Information Sciences,* 2015, 73-80